# EUROPEAN PATENT SPECIFICATION

(11) **EP 2 765 035 B1**
(45) Date of publication and mention of the grant of the patent: **17.01.2018**
(21) Application number: 14153836.3
(22) Date of filing: 04.02.2014
(51) Int. Cl.: B60R 21/213, B60R 21/16

(54) **Mounting**
Befestigung
Système de montage

(30) Priority: 07.02.2013 GB 201302160
(43) Date of publication of application: 13.08.2014
(73) Proprietor: Nissan Motor Manufacturing (UK) Ltd., Cranfield Bedfordshire MK43 0DB (GB)
(72) Inventor: Taylor, Guy, Cranfield, Bedfordshire MK430DB (GB)

(56) References cited:
- GB-A- 2 426 232
- GB-A- 2 444 248
- US-A1- 2004 169 357

## Description

### Field of the invention

The invention relates to a mounting for a curtain airbag assembly. In particular, the invention relates to a mounting for securing a curtain airbag assembly to a vehicle inner side.

### Background of the invention

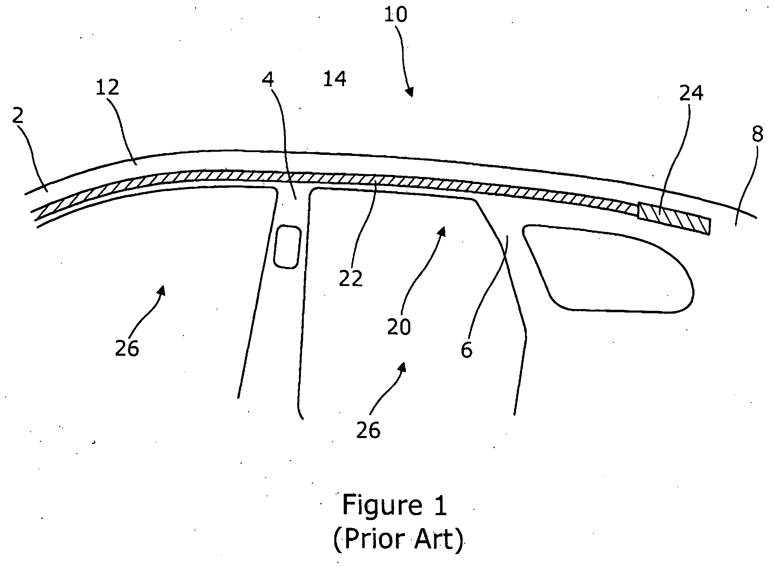

Curtain airbag assemblies are well known in the automotive industry. Curtain airbag assemblies are commonly affixed to either the left inner side or the right inner side of a vehicle, adjacent the roof. Typically, a vehicle will have a pair of curtain airbag assemblies, one mounted to the left inner side and one to the right inner side, such that when deployed, each curtain airbag .assembly is inflated to cover a substantial part of the respective inner sides of the vehicle. Various mounting assemblies are known in the art. For example, GB2426232 and GB24444248 both disclose mounting assemblies suitable for deploying curtain airbags. Such assemblies, though, may be difficult to assemble given increasingly limited access in modern vehicles where traditional mounting locations such as the "B" pillar, decrease in size.
In the event of a vehicle fitted with a curtain airbag assembly being involved in a front, side or rollover accident, the curtain airbag can be deployed to provide an impact absorbing layer between a vehicle driver or passenger, and the side windows of a vehicle. The resultant cushioning effect reduces the risk of injury of the passenger or driver in the event of such an accident.
An inner side of a vehicle 10 as known in the art is illustrated in Figure 1. Figure 1 shows the positioning and mounting of a typical curtain airbag assembly 20 to the vehicle side 10 and adjacent a vehicle roof 14. The vehicle side 10 is of a standard body length and is fitted with a known curtain airbag assembly 20, of a predetermined length to correspond to the length of the vehicle side 10.
The vehicle side 10 includes four pillars, which support the vehicle roof 14 on that side. The pillars are commonly known as the 'A' pillar 2, 'B' pillar 4, 'C' pillar 6 and 'D' pillar 8. The 'A' pillar 2 is disposed adjacent to a front windscreen located towards a front end of the vehicle (not shown). The 'B' pillar 4 is positioned between two side door apertures 26, each receiving a side door. The 'C' pillar 6 is positioned behind the rear-most side door aperture 26 towards a rear end of the vehicle side 10 and the 'D' pillar 8 is positioned adjacent the rear-end of the vehicle (not shown). The four pillars (located on each side 10 of the vehicle) generally support a roof frame.

The roof frame has two substantially parallel cant rails 12, with one being located on each side 10 of the vehicle. The cant rails 12 are generally elongate and extend in a horizontal direction, parallel to the longitudinal axis of the vehicle. Each cant rail 12 connects the top of each pillar on a vehicle side 10 and provides a surface for the curtain airbag assembly 20 to be mounted. When deployed, an airbag will drop down from the cant rail 12 (attached to assembly 20) to adopt a curtain-like cover over the side-doors (not shown) of the vehicle.

The curtain airbag assembly 20 typically includes a folded airbag 22 and a curtain airbag inflator 24. The curtain airbag inflator 24 is designed to provide a large volume of inflation gas into the airbag 22 in the event of a crash or impact, causing the airbag 22 to inflate and deploy.

Known curtain airbag assemblies are mounted to a cant rail by a mounting bracket, or a series of mounting brackets. The mounting bracket(s) can be affixed to the vehicle via multiple bolts. The bolts are secured through bolt fixing apertures located on the mounting bracket. The mounting bracket generally also comprises a load area to support the inflator.

As a 'B' pillar is generally located towards the centre of a vehicle side along its longitudinal axis, the centre of the curtain airbag is usually positioned at or near the 'B' pillar, when mounted. Therefore it is common for a mounting bracket to be secured on, at or near the intersection of the cant rail and the 'B' pillar in order to carry the central load of the curtain airbag.

For an increased load bearing function, stronger mounting plates are needed. This is particularly the case for mounting brackets used to secure curtain airbags at the 'B' pillar. A high load bearing mounting bracket is usually employed when a secure fixation of the airbag inflator is required due to the airbag inflator's reaction force during its firing and deployment, where a structural ramp is required to direct a curtain airbag inflator over obstacles on the vehicle side e.g. over the vehicle trim or vehicle seatbelt, and/or where a robust load bearing mounting is required at critical areas of the curtain airbag.

In order to provide an adequate load bearing mounting for the curtain airbag to be fixed at the 'B' pillar, more than one bolt fixing is usually employed on a respective mounting bracket. By using more than one bolt fixing, the mounting bracket and airbag inflator can be adequately retained against the cant rail.

Known 'B' pillar mounting brackets with single bolt fixings do not have the load bearing capacity or strength to prevent the formation of loose attachment areas that cause rattle, vibration or noise, nor are they strong enough to retain a consistently smooth pathway of deployment of the airbag inflator upon an impact.

A disadvantage of known 'B' pillar mounting brackets that include multiple bolt fixings is that the bolt fixing apertures on the mounting bracket must be out-of-plane and not in line with the load area. This is because if the bolt fixing apertures were located in-the-plane of the load area, there would be insufficient tool access for an installer to tighten the bolts through the bolt fixing apertures, when the mounting bracket and airbag inflator have been positioned against the vehicle side. The installer would have such limited access as a result of the un-inflated folded airbag obscuring the respective bolt fixing apertures. The out-of-plane bolt apertures are increasingly cumbersome with respect to new vehicle designs due to the space constraints around the 'B' pillar and the cant rail. This is due to the increasing mechanical functionality within the 'B' pillar and other vehicle side areas that impose limitations on where the curtain airbag assembly can be affixed. These constraints mean that the available positions on the 'B' pillar for mounting the curtain airbag assembly are becoming increasingly restricted to the upper regions towards the vehicle roof, therefore limiting the space for the out of plane bolts to be fixed.

Therefore, there is a need for an improved mounting for a curtain airbag assembly, which addresses the aforementioned problems.

### Summary of the invention

According to a first aspect of the present invention there is provided a mounting for securing a curtain airbag assembly to a vehicle panel using a fixing means. The mounting comprises a support portion arranged to support the airbag assembly and a fixing portion co-operable with the fixing means to fix the mounting to a front side of the vehicle panel. The mounting further comprises a horizontal member which includes the support portion, and a vertical member which extends substantially perpendicular to the horizontal member and includes the fixing portion: wherein the horizontal and vertical members are in the same plane; and at least one clip for securing the mounting to said vehicle panel and the clip is resilient to apply a bracing force to a rear side of the vehicle panel in use.

Although in a preferred mode, the arrangement of the mounting is such that there are two clips and one fixing portion to receive one fixing means, it will be borne in the mind of a skilled person that the mounting may comprise any combination of multiples of clips and fixing portions. The bracing force of the or each clip which secures the mounting to the vehicle panel may prevent any rattling or movement of the mounting about the vehicle panel. The or each clip may provide a securement means strong enough to withstand an explosive deployment of the curtain airbag assembly at a 'B pillar' of the vehicle panel, for example. A curtain airbag assembly needs to be particularly secure at the 'B' pillar of a vehicle due to the high loads and force generated by the curtain airbag assembly when deployed, in use. The bracing force of the clip means that in use, in combination with the fixing means applied to the fixing portion, the mounting can be secured to the 'B' pillar of the vehicle panel with sufficient strength to withstand these loads /forces.

The support portion may be disposed between the or each clip and the fixing portion. The support portion is advantageous as it provides a surface that an airbag assembly can interact with, such that the inflator remains in the desired position for deployment. The fixing portion can receive the fixing means to fix the mounting to said vehicle panel, upon application of a fixing force to the fixing means.

In use and upon application of the fixing force, the mounting is directed towards the vehicle panel to brace the mounting against the vehicle panel.

The mounting may comprise a first side on which the airbag assembly is supported and a second side from which the or each clip protrudes.

The mounting may comprise a horizontal member which includes the support portion, and a vertical member which extends substantially perpendicular to the horizontal member and includes the fixing portion. The horizontal and vertical members may be in the same plane.

The or each clip may be located on the horizontal member. The or each clip may be located on a top edge of the horizontal member. The mounting may preferably be substantially 'T' shaped. However, it will be borne in the mind of the skilled person that the vertical portion may be positioned anywhere along the horizontal axis of the horizontal portion to form other conformations other than a 'T' shape, for example an 'L' shape.

The fixing portion comprises an aperture for receiving the fixing means. The aperture may be arranged to receive a bolt fixing means. The use of a bolt as a fixing means is advantageous as it provides a strong and tight fixing to secure the mounting to the vehicle inner side and can apply a fixing force to the mounting upon application of torque to the bolt. The application of torque means that the fixing force is unidirectional.

The or each clip may comprise a first portion which engages with the rear side of the vehicle panel and a second portion which is spaced from the rear side of the vehicle panel in use. Preferably the first portion of the or each clip comprises an abutment surface which engages with the rear side of the vehicle panel, in use. In one mode the clip may be substantially 'S' or 'Z' shaped. The use of the clip is advantageous as the abutment surface of the or each clip may provide an interference fit against the rear side of the vehicle panel, in use. The use of a clip as opposed to an additional fixing means, allows the mounting to be positioned and secured into position during a pre-assembly stage. In use, the mounting can be braced onto the vehicle panel by pushing the mounting on to the vehicle panel such that the vehicle panel is braced against the abutment surface of the clip.

In a preferable mode, application of a fixing force to the fixing portion may apply leverage to the or each clip to increase the bracing force on the rear side of the panel. The leverage may be applied about a pivot disposed between the or each clip and the fixing portion. The pivot may abut the front side of the vehicle panel in use. In use and upon application of the fixing force, the mounting may pivot about the vehicle panel to cause an increase in the bracing force of the clip.

Upon a movement of the mounting about the pivot, the bracing force may act in a direction to counter the fixing force.

The fixing portion may comprise an alignment means for aligning the fixing portion with an aperture of the vehicle panel. Preferably the alignment means may comprise an alignment pin which protrudes from the fixing portion to cooperate with the aperture of the vehicle panel. The alignment pin ensures that the aperture of the mounting is in line with a corresponding weld stud or aperture, for example, provided on the vehicle panel. This facilitates the assembly process of the mounting on to the vehicle panel and means that manual adjustment of the mounting is not required during application of the fixing force to the fixing portion.

The support portion may comprise a support ledge for supporting the airbag assembly.

The mounting may comprise a ramp for directing an airbag of the airbag assembly upon deployment, during use. The ramp is advantageous as during deployment, it provides a pathway for the airbag to inflate, such that the deployed, inflated airbag is not obstructed in its inflation by additional vehicle parts e.g. a vehicle seatbelt.

Preferably the mounting may comprise two ramps separated by the fixing portion. The separation of the two ramps by the fixing portion allows for a gap between the two ramps such that a user can readily access the fixing portion to apply the fixing means, during assembly.

According to a second aspect of the present invention, there is provided in combination, a curtain airbag assembly comprising an airbag and an airbag inflator for inflating the airbag; and a mounting according to the first aspect of the invention.

According to a third aspect of the present invention, there is provided a vehicle comprising a mounting according to the first aspect of the invention, or the combination according to the second aspect of the invention.

According to a fourth embodiment of the present invention, there is provided a method of fixing a mounting for securing a curtain airbag assembly to a vehicle panel, the mounting comprising at least one clip. The method comprises engaging the at least one clip of a first portion,of the mounting to the vehicle panel and fixing the mounting to the vehicle panel using a fixing means at a location remote from the clip. The or each clip is resilient to apply a bracing force to the panel.

The method may comprise applying a fixing force at a location remote from the clip to fix the vehicle mounting to the vehicle panel.

The method may comprise applying leverage to the or each clip to increase the bracing force on the panel by applying the fixing force.

The method may comprise aligning the or each clip with a respective aperture on the vehicle panel, and sliding the mounting with respect to the vehicle panel to engage the or each clip with the vehicle panel.

It will be appreciated that preferred and/or optional features of the first aspect of the invention may be incorporated alone or in appropriate combination within the second or third aspects of the invention also.

### Brief description of the figures

For a better understanding of the invention and to show how the same may be carried into effect, there will now be described, by way of example only, specific embodiments, methods and processes according to the present invention, with reference to the Figures, in which:
Figure 1 illustrates a known curtain airbag assembly arranged on an inner side of a vehicle;
Figure 2 illustrates a schematic diagram of a mounting for a curtain airbag assembly according to an embodiment of the present invention, arranged on the inner side of a vehicle;
Figure 3 illustrates a front perspective view of the mounting of Figure 2 arranged on the inner side of the vehicle;
Figure 4 illustrates a rear perspective view of the mounting of Figure 2;
Figure 5 illustrates an enlarged view of a main body of the mounting of Figure 2 ; and
Figure 6 illustrates a side view of the mounting of Figure 2.

### Detailed description of the embodiments of the invention

There will now be described by way of example, a specific mode contemplated by the inventors. In the following description numerous specific details are set forth in order to provide a thorough understanding. It will be apparent to one skilled in the art however, that the present invention may be practiced without limitation to these specific details. In other instances, well-known methods and structures have not been described so as not to unnecessarily obscure the description.

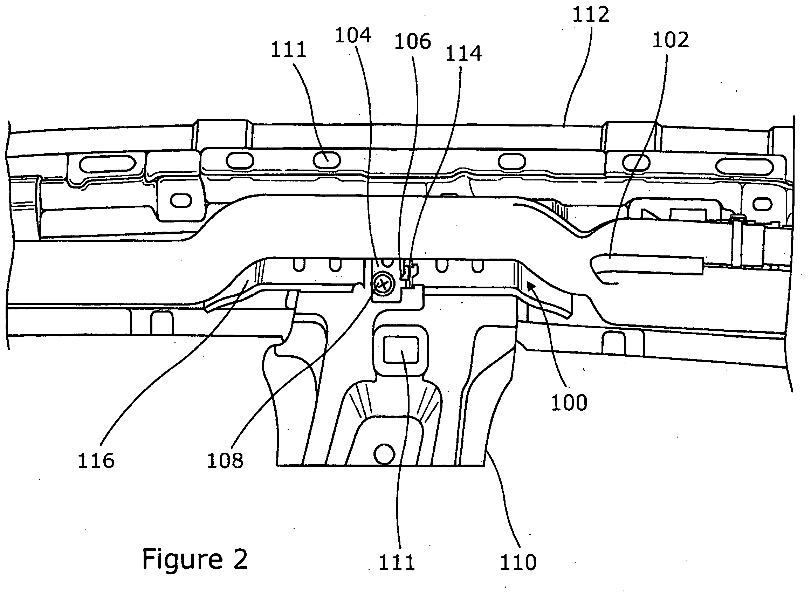

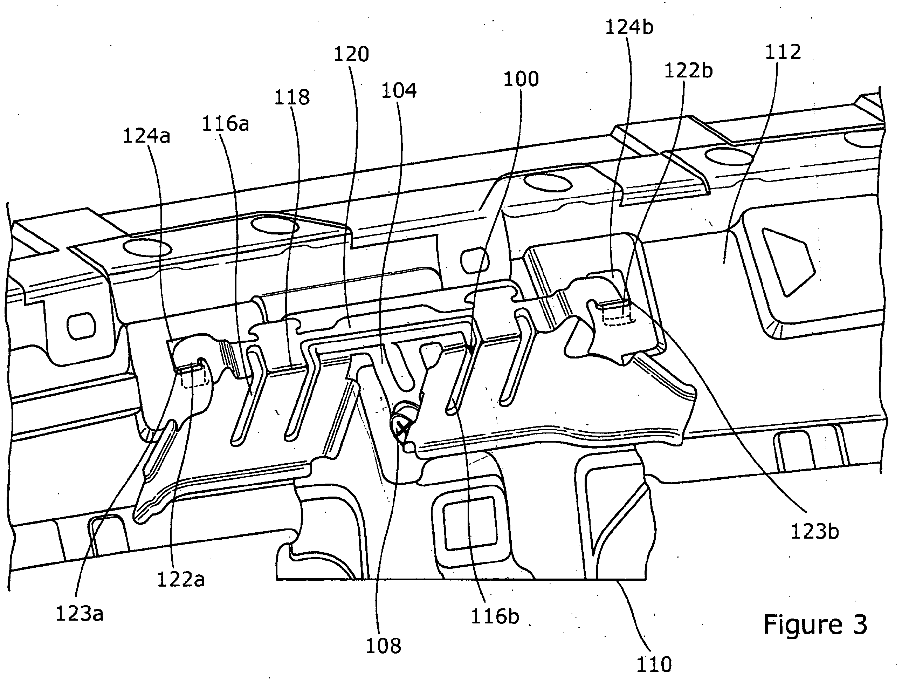

Referring to Figures 2 and 3 herein, a mounting 100 is used to hold a curtain airbag assembly on a side panel of a vehicle having a 'B' pillar 110 and a cant rail 112. During assembly, the mounting 100 is affixed to a front side of the panel, or at the intersection of the 'B' pillar 110 and the cant rail 112. The mounting 100 is used to secure the curtain airbag assembly as part of the assembly process of the vehicle. The curtain airbag assembly includes a folded airbag102. The curtain airbag assembly also includes a airbag inflator (not shown). The airbag inflator inflates the folded airbag 102 upon deployment. The curtain airbag assembly forms a singularly integrated component with the mounting 100.

The cant rail 112 is generally elongate and extends in a horizontal direction, perpendicular to a longitudinal axis of the 'B' pillar 110. The cant rail 112 connects a top of the 'B' pillar 110 to a roof (not shown) of the vehicle. The 'B' pillar 110 is positioned between two side door apertures 26, each being arranged to receive a side door (not shown) of the vehicle. The curtain airbag assembly extends substantially along the whole of the horizontal axis of the cant rail 112, such that in the event of a deployment, the folded airbag 102 is inflated, which provides an inflated barrier across the whole front panel of the vehicle.

Both the cant rail 112 and the 'B' pillar 110 include a series of openings, holes and recesses 111 including a set of openings 124a, 124b. Specifically, the mounting 100 is braced against the vehicle at the set of openings 124a, 124b. The mounting 100 can be mated with and secured against the openings 124a, 124b by a number of mating and fixing means, as will be described later. Each opening 124a, 124b has a flat mounting surface 123a, 123b respectively, arranged around the peripheral edge of the respective opening 124a, 124b. The mounting 100 can engage with each flat mounting surface 123a, 123b.

The mounting 100 is arranged to retain the curtain airbag assembly such that firstly, the folded airbag 102 is in the correct position for deployment, secondly, so that during deployment, the curtain airbag assembly doesn't rattle around when the mounting 100 is secured to the vehicle panel and thirdly so that when the folded airbag 102 is deployed, the mounting 100 retains the airbag assembly in its correct position.

In order to accommodate the airbag assembly and to be strong enough to carry a substantial load of the airbag assembly, a main body of the mounting 100 has a first elongate portion which defines a horizontal member or horizontal portion 120. The horizontal portion 120 lies across the cant rail 112 in line with the folded airbag 102. The main body also includes a second elongate portion which defines a vertical member or vertical portion 104. The vertical portion 104 lies vertically along the axis of the 'B' pillar 110. The horizontal portion 120 and the vertical portion 104 form a uniform main body of the mounting 100, in a 'T' shaped conformation. The horizontal portion 120 and the vertical portion 104 are planar relative to one another.

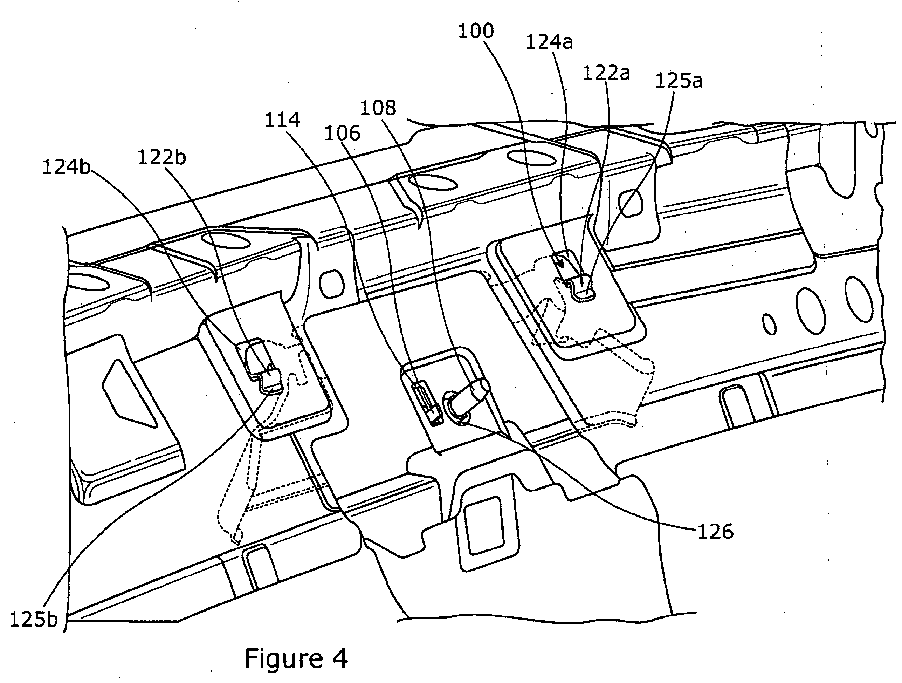

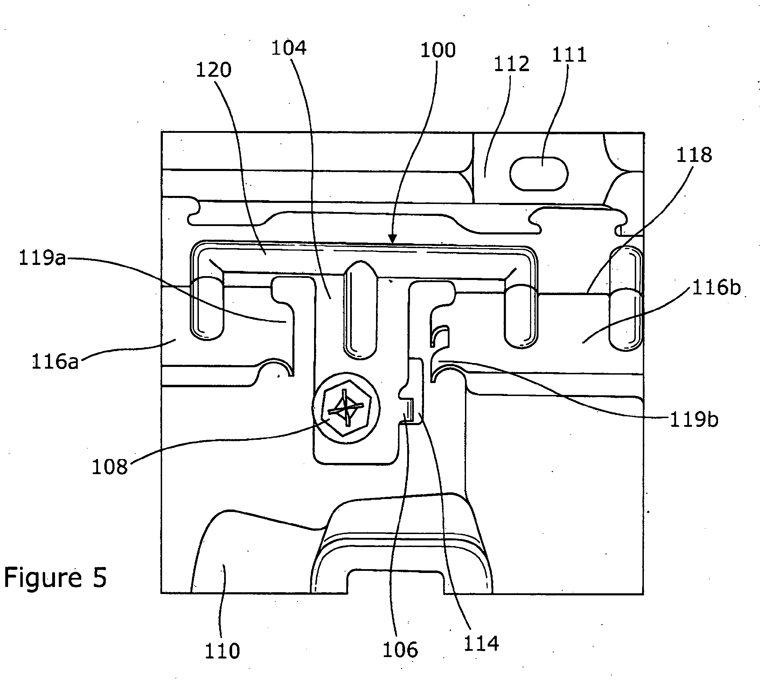

Referring also to Figures 4 and 5, the mounting 100 includes a ramp 116. The ramp 116 is a substantially flat plate-like structure and is split so that there are two ramp sections 116a, 116b, one being located either side of the vertical portion 104. The split ramp sections 116a, 116b provide a clear pathway for a user to access the vertical portion 104. The ramp sections 116a, 116b form a joint 118 with the horizontal portion 120 of the main body and extend outwardly therefrom. The ramp sections 116a, 116b and the horizontal portion 120 therefore form a support ledge at the joint 118, on which the curtain airbag assembly is mounted.

Each ramp section 116a, 116b has a sloping end 119a, 119b. The sloping ends 119a, 119b provide additional preventative protection for obstructive objects, such as seatbelt holders, from affecting the inflation pathway of the folded airbag 102, when deployed.

The vertical portion 104 includes a fixing portion in the form of an aperture 126. The aperture 126 forms a bore through the vertical portion 104 of the mounting. The aperture 126 is arranged to correspond with another aperture located on the vehicle panel. The aperture 126 and the vertical portion 104 are located centrally of the horizontal portion 120 such that the vertical portion 104 and horizontal portion 120 substantially form a 'T' shaped configuration. The aperture 126 is mated and secured with the corresponding vehicle panel aperture by securing a suitable fixing means through them, an example of a fixing means being a bolt 108. The bolt 108 has a head portion and a tail portion, the tail portion being threaded. The bolt 108 is fixed through the aperture 126 of the vehicle panel, thereby to secure the mounting 100 to the inner side of the vehicle panel.

The aperture 126 is located towards an exposed end of the vertical portion 104 away from the end at which the vertical portion 104 joins the horizontal portion 120. Through application of the bolt 108 to the aperture 126, the vertical portion 104 can be tightly engaged with the vehicle panel.

The horizontal portion 120 has a set of clips 122a, 122b which cooperate with the openings 124a, 124b. The clips 122a, 122b are arranged in the same horizontal plane as one another, but do not lie in the same horizontal plane as the aperture 126.

The aperture 126 is equidistant from each of the clips 122a, 122b. This configuration ensures that the mounting 100 has a 3-point fixing structure i.e. the clips 122a, 122b and the aperture 126 which can receive the bolt 108. This, coupled with the 'T' shaped conformation of the main body 104, 120, provides the mounting 100 with a stable structure with an even load distribution to accommodate the load and force from when the curtain airbag assembly 102 is deployed. Furthermore, by being able to secure the exposed ends of the horizontal portion 120 and the exposed end of the vertical portion 104, the movement and rattling of the mounting 100 is minimized when the mounting 100 is attached to the vehicle panel.

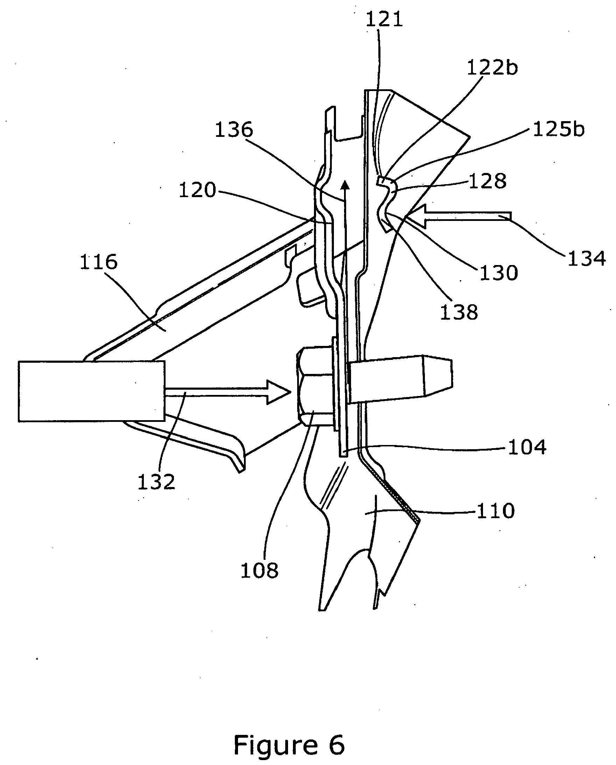

Referring also to Figure 6, each clip 122a, 122b has a clip body 125a, 125b respectively. In Figure 6 only one of the clips 122b is illustrated, but the shape and orientation of the clip 122b is replicated by the other clip 122a, located on the opposite end of the horizontal portion 120 of the mounting 100. The clip 122b extends from the horizontal portion 120 and its shape dictates and directs the forces exerted on the mounting 100. The clips 122a, 122b take an 'S', or 'Z' conformation. Consequently, the clip includes a protrusive portion 128 and a recessive portion 130. The recessive portion 130 includes an abutment surface 138 which provides a surface for the clip 122b to engage with the rear side of the vehicle panel. When clipped on to the vehicle panel, and although the abutment surface 138 engages with the vehicle panel, the protrusive section 128 has a surface which extends away and is spaced from the vehicle panel. The clip 122b adjoins the horizontal portion 120 to form a clip joint 121.

Force arrows 132,134 are shown in Figure 6, to represent the forces acting on the mounting 100 when the clip 122b is braced to the vehicle panel.

The clip body 125b is resilient, and hence able to flex. As it flexes upon application of a force it creates an opening between the mounting 100 and the recessive portion 130 to allow the vehicle panel to be received therebetween. In order to clip the mounting 100 onto the vehicle panel, each clip 122a, 122b is lifted over the flat mounting surface 123a, 123b of the respective opening 124a, 124b and is then released such that the vehicle panel is braced between the resilient clips 122a, 122b and the horizontal portion 120 of the mounting 100. The flexibility of the clips 122a, 122b permits the clip body 125a, 125b to be lifted over the flat mounting surface 123a, 123b of the respective opening 124a, 124b.

Referring again to Figures 2 and 4, the mounting 100 includes a protrusion in the form of an alignment pin 106. The alignment pin 106 is located substantially adjacent to the aperture 126 and is used to position the mounting during a pre-assembly stage of vehicle production and prior to the bolt 108 being inserted into the aperture 126 to secure the mounting 100 to the inner side of the vehicle panel. The alignment pin 106 extends out on the same face as the clips 122a, 122b and can extend through an alignment hole 114 of the vehicle panel. In this way, when the clips 122a, 122b are fitted to the vehicle panel, the mounting 100 is retained at a fixed vertical position and the alignment pin 106 facilitates maintenance of the mounting 100 in a fixed horizontal position.

The alignment pin 106 is located adjacent to the aperture 126 such that the bolt 108 is guided through the aperture 126 into the corresponding opening 111 in the vehicle panel. This way, at the point at which it is necessary to perform the fixing operation, the mounting 100 is already positioned correctly.

The mounting 100 for the curtain airbag assembly undergoes a two-stage assembly process, the pre-assembly stage and an assembly stage, as will now be described in further detail.

During the pre-assembly stage, the mounting 100 is positioned and fixed on to the vehicle panel, as described previously. The aperture 126 of the mounting 100 is positioned on the vehicle panel by aligning the alignment pin 106 into the alignment hole 114 on the vehicle panel. Each clip 122a, 122b is clipped onto the respective flat mounting surface 123a, 123b of the respective opening 124a, 124b on the inner side of the vehicle, by sliding the mounting 100 downwardly. The resilience of the clips 122a, 122b allows each clip body 125a, 125b to flex so as to allow the vehicle panel to slide between each clip body 125a, 125b and the horizontal portion 120 of the mounting 100. It is at the pre-assembly stage, where the mounting 100 is fixed and aligned at a specific position on the vehicle panel, where the clips 122a, 122b act to prevent the mounting 100 from rattling and/or moving out of the desired, aligned position on the vehicle panel.

By clipping the mounting 100 onto the vehicle panel during the aforementioned pre-assembly stage, the mounting 100 is not only positioned on the vehicle panel, but also secured at the horizontal portion 120. The mounting 100 is retained on the vehicle panel by a bracing force 134 which each clip 122a, 122b imparts onto the outer side of the vehicle panel.

Once the vehicle panel has been received between the horizontal portion 120 and each clip body 125a, 125b, the resilience of the clips 122a, 122b causes the clip bodies 125a, 125b to apply a bracing force 134 to the rear side of the panel. The bracing force 134 is translated through the abutment surface 138 of the recessive portion 130 of each clip 122a, 122b to retain the vehicle panel between the clip and the horizontal portion 120.

Following the pre-assembly stage, the mounting 100 requires an additional strengthening means such as to withstand the force and loads of the curtain airbag assembly during deployment. For this purpose the mounting is provided with a bolt 108.

During the subsequent assembly stage, the mounting 100 is secured on the vehicle panel by the bolt 108. The bolt 108 is secured through the aperture 126 located on the vertical portion 104 of the mounting 100. The bolt 108 is screwed through the aperture 126 into the threaded recess of the opening 111 on the vehicle panel and is screwed tight. The fixing of the bolt 108 to fix the mounting 100 to the vehicle panel provides a secure fixing of the vertical portion 104, which increases the stability of the mounting 100 when secured to the vehicle side. When the bolt 108 is inserted through the aperture 126, a torque can be applied to the head of the bolt 108 such that the bolt 108 is driven through the aperture 126 and into the receiving opening 111 of the vehicle panel. The receiving opening 111 includes a thread (not shown) located around its peripheral edge, which complements the thread on the tail of the bolt 108. The torque applied to the bolt 108 is transferred as a fixing force 132 to the peripheral edge of the aperture 126 and to the vertical portion 104 of the mounting 100. The fixing force 132 is in a direction that is substantially perpendicular to the vertical axis 136 of the mounting 100. The fixing force 132 drives the vertical portion 104 of the mounting 100 against the front side of the vehicle panel to provide a secure fixing of the mounting 100 thereto.

The application of the fixing force 132 to the vertical portion 104 following pre-assembly stabilises the mounting 100 as both the horizontal portion 120 and the vertical portion 104 of the mounting 100 are positively secured to the vehicle panel. This means that the load of the curtain airbag assembly acting on the mounting 100 is evenly distributed over each point of securement of the mounting 100, to the vehicle panel.

In a further embodiment, the mounting may include a pivot (not shown) to allow the mounting to pivot relative to the vehicle panel. The bracing of the vertical portion 104 by the fixing of the bolt causes the mounting to turn about the pivot to apply leverage to each clip 122a, 122b The leverage increases the bracing force 134 applied to the rear side of the vehicle panel by each clip 122a, 122b, therefore strengthening the engagement of the abutment surface 138 with the rear side of the vehicle panel.

It will be understood that the embodiments described above are given by way of example only and are not intended to limit the invention, the scope of which is defined in the appended claims. It will also be understood that the embodiments described may be used individually or combined.

## Claims

1. A mounting (100) for securing a curtain airbag assembly to a vehicle panel using a fixing means, said mounting comprising:
a support portion arranged to support the airbag assembly, and a fixing portion (126) co-operable with the fixing means to fix the mounting to a front side of the vehicle panel;
**Characterised in that**
the mounting (100) comprises a horizontal member (120) which includes the support portion, and a vertical member (104) which extends substantially perpendicular to the horizontal member and includes the fixing portion (126); wherein the horizontal and vertical members are in the same plane;
and at least one clip (122a, 122b) for securing the mounting to said vehicle panel; the clip being resilient to apply a bracing force to a rear side of the vehicle panel in use.

2. A mounting (100) as claimed in claim 1, wherein the support portion is disposed between the or each clip and the fixing portion.

3. A mounting (100) as claimed in claim 1 or claim 2, wherein the mounting comprises a first side on which the airbag assembly is supported and a second side from which the or each clip protrudes.

4. A mounting (100) as claimed in claim 3, wherein the or each clip (122a, 122b) is located on the horizontal member (120) .

5. A mounting (100) as claimed in claim 4, wherein the or each clip (122a, 122b) is located on a top edge of the horizontal member (120).

6. A mounting (100) as claimed in any of claims 3 to 5, wherein the mounting is substantially 'T' shaped.

7. A mounting (100) as claimed in any of the preceding claims, wherein the fixing portion comprises an aperture (126) for receiving the fixing means.

8. A mounting (100) as claimed in any of the preceding claims, wherein the or each clip (122a, 122b) comprises a first portion (130) arranged to engage with the rear side of the vehicle panel and a second portion (128) which is spaced apart from the rear side of the vehicle panel in use.

9. A mounting (100) as claimed in claim 8, wherein the first portion of the or each clip comprises an abutment surface (138) arranged to engage with the rear side of the vehicle panel, in use.

10. A mounting (100) as claimed in any of the preceding claims, wherein the clip (122a, 122b) is substantially 'S' or 'Z' shaped.

11. A mounting (100) as claimed in any of the preceding claims and arranged such that, in use, application of a fixing force to the fixing portion applies leverage to the or each clip(122a, 122b) to increase the bracing force (134) on the rear side of the panel.

12. A mounting (100) as claimed in claim 11, comprising a pivot is disposed between the or each clip (122a, 122b) and the fixing portion such that, upon application of the fixing force (134), the mounting (100) turns about the pivot to apply the leverage to the or each clip (122a, 122b).

13. A mounting (100) as claimed in claim 12, wherein the pivot is arranged to abut the front side of the vehicle panel in use.

14. A mounting (100) as claimed in any of the preceding claims, wherein the fixing portion comprises an alignment means for aligning the fixing portion with an aperture (126) of the vehicle panel.

15. A mounting (100) as claimed in claim 14, wherein the alignment means comprises an alignment pin (106) which protrudes from the fixing portion to cooperate with the aperture of the vehicle panel.

16. A mounting (100) as claimed in any of the preceding claims, wherein the support portion comprises a support ledge (116a, 116b, 120) for supporting the airbag assembly.

17. A mounting (100) as claimed in any of the preceding claims, wherein the mounting comprises a ramp (116) for directing an airbag of the airbag assembly upon deployment, during use.

18. A mounting (100) as claimed in claim 17 wherein, the mounting comprises two ramps (116a, 116b) separated by the fixing portion (126).

19. In combination, an airbag assembly comprising an airbag and a curtain airbag assembly for inflating the airbag; and a mounting (100) as claimed in any of the preceding claims.

20. A vehicle comprising a mounting (100) as claimed in any of claims 1 to 18, or the combination as claimed in claim 19.

21. A method of fixing a mounting (100), as claimed in claim 1, for securing a curtain airbag assembly to a vehicle panel, the mounting comprising at least one clip (122a, 122b), the method comprising:
engaging the or each clip (122a, 122b) to the vehicle panel; and
fixing the mounting (100) to the vehicle panel using a fixing means (126) at a location remote from the clip;
applying a fixing force to the mounting at the location remote from the clip (122a, 122b) to fix the vehicle mounting to the vehicle panel;
wherein the or each clip (122a, 122b) is resilient to apply a bracing force (134) to the panel.

22. A method as claimed in claim 21, wherein applying the fixing force applies leverage to the or each clip (122a, 122b) to increase the bracing force (134) on the panel.

23. A method as claimed in any of claims 21 to 22, comprising aligning the or each clip (122a, 122b) with a respective aperture (126) on the vehicle panel, and sliding the mounting (100) with respect to the vehicle panel to engage the or each clip with the vehicle panel.

## Patentansprüche

1. Befestigung (100) zum Sichern einer Vorhangairbaganordnung an einer Fahrzeugplatte unter Verwendung eines Fixierungsmittels, wobei die Befestigung Folgendes umfasst:
einen Stützabschnitt, angeordnet, die Airbaganordnung zu stützen, und einen Fixierungsabschnitt (126), der mit dem Fixierungsmittel zusammenwirken kann, um die Befestigung an einer Vorderseite der Fahrzeugplatte zu fixieren;
**dadurch gekennzeichnet, dass**
die Befestigung (100) ein horizontales Element (120), das den Stützabschnitt enthält, und ein vertikales Element (104), das sich im Wesentlichen senkrecht zum horizontalen Element erstreckt und den Fixierungsabschnitt (126) enthält, umfasst; wobei das horizontale und das vertikale Element sich in der gleichen Ebene befinden;
und wenigstens eine Klammer (122a, 122b) zum Sichern der Befestigung an der Fahrzeugplatte; wobei die Klammer elastisch ist, um im Gebrauch eine Spannkraft auf eine Rückseite der Fahrzeugplatte aufzubringen.

2. Befestigung (100) nach Anspruch 1, wobei der Stützabschnitt zwischen der oder jeder Klammer und dem Fixierungsabschnitt angeordnet ist.

3. Befestigung (100) nach Anspruch 1 oder 2, wobei die Befestigung eine erste Seite, auf der die Airbaganordnung gelagert ist, und eine zweite Seite, von der die oder jede Klammer hervorsteht, umfasst.

4. Befestigung (100) nach Anspruch 3, wobei die oder jede Klammer (122a, 122b) sich auf dem horizontalen Element (120) befindet.

5. Befestigung (100) nach Anspruch 4, wobei die oder jede Klammer (122a, 122b) sich auf einer Oberkante des horizontalen Elements (120) befindet.

6. Befestigung (100) nach einem der Ansprüche 3 bis 5, wobei die Befestigung im Wesentlichen "T"-förmig ist.

7. Befestigung (100) nach einem der vorhergehenden Ansprüche, wobei der Fixierungsabschnitt eine Öffnung (126) zum Aufnehmen des Fixierungsmittels umfasst.

8. Befestigung (100) nach einem der vorhergehenden Ansprüche, wobei die oder jede Klammer (122a, 122b) im Gebrauch einen ersten Abschnitt (130), der angeordnet ist, in die Rückseite der Fahrzeugplatte einzugreifen, und einen zweiten Abschnitt (128), der von der Rückseite der Fahrzeugplatte beabstandet ist, umfasst.

9. Befestigung (100) nach Anspruch 8, wobei der erste Abschnitt der oder jeder Klammer im Gebrauch eine Berührungsoberfläche (138), die angeordnet ist, in die Rückseite der Fahrzeugplatte einzugreifen, umfasst.

10. Befestigung (100) nach einem der vorhergehenden Ansprüche, wobei die Klammer (122a, 122b) im Wesentlichen "S"- oder "Z"-förmig ist.

11. Befestigung (100) nach einem der vorhergehenden Ansprüche und derart angeordnet, dass das Aufbringen einer Fixierungskraft auf den Fixierungsabschnitt eine Hebelwirkung auf die oder jede Klammer (122a, 122b) aufbringt, um die Spannkraft (134) auf die Rückseite der Platte zu verstärken.

12. Befestigung (100) nach Anspruch 11, die umfasst, dass ein Drehpunkt zwischen der oder jeder Klammer (122a, 122b) und dem Fixierungsabschnitt derart angeordnet ist, dass die Befestigung (100) beim Aufbringen der Fixierungskraft (134) sich um den Drehpunkt dreht, um die Hebelkraft auf die oder jede Klammer (122a, 122b) aufzubringen.

13. Befestigung (100) nach Anspruch 12, wobei der Drehpunkt angeordnet ist, im Gebrauch an die Vorderseite der Fahrzeugplatte anzustoßen.

14. Befestigung (100) nach einem der vorhergehenden Ansprüche, wobei der Fixierungsabschnitt ein Ausrichtungsmittel zum Ausrichten des Fixierungsabschnitts an einer Öffnung (126) der Fahrzeugplatte umfasst.

15. Befestigung (100) nach Anspruch 14, wobei das Ausrichtungsmittel einen Ausrichtungsstift (106) umfasst, der von dem Fixierungsabschnitt hervorsteht, um mit der Öffnung der Fahrzeugplatte zusammenzuwirken.

16. Befestigung (100) nach einem der vorhergehenden Ansprüche, wobei der Stützabschnitt einen Stützvorsprung (116a, 116b, 120) zum Stützen der Airbaganordnung umfasst.

17. Befestigung (100) nach einem der vorhergehenden Ansprüche, wobei die Befestigung während des Gebrauchs eine Rampe (116) zum Leiten eines Airbags der Airbaganordnung beim Entfalten umfasst.

18. Befestigung (100) nach Anspruch 17, wobei die Befestigung zwei durch den Fixierungsabschnitt (126) getrennte Rampen (116a, 116b) umfasst.

19. Airbaganordnung in Kombination, umfassend einen Airbag und eine Vorhangairbaganordnung zum Aufblasen des Airbags; und eine Befestigung (100) nach einem der vorhergehenden Ansprüche.

20. Fahrzeug, umfassend eine Befestigung (100) nach einem der Ansprüche 1 bis 19 oder die Kombination nach Anspruch 19.

21. Verfahren zum Fixieren einer Befestigung (100) nach Anspruch 1 zum Sichern einer Vorhangairbaganordnung an eine Fahrzeugplatte, wobei die Befestigung wenigstens eine Klammer (122a, 122b) umfasst, wobei das Verfahren Folgendes umfasst:
Eingreifen der oder jeder Klammer (122a, 122b) in die Fahrzeugplatte; und
Fixieren der Befestigung (100) an die Fahrzeugplatte unter Verwendung eines Fixierungsmittels (126) an einer von der Klammer entfernten Stelle;
Aufbringen einer Fixierungskraft auf der Befestigung an der von der Klammer (122a, 122b) entfernten Stelle, um die Fahrzeugbefestigung an der Fahrzeugplatte zu fixieren;
wobei die oder jede Klammer (122a, 122b) elastisch ist, um eine Spannkraft (134) auf die Platte aufzubringen.

22. Verfahren nach Anspruch 21, wobei das Aufbringen der Fixierungskraft eine Hebelkraft auf die oder jede Klammer (122a, 122b) aufbringt, um die Spannkraft (134) auf die Platte zu verstärken.

23. Verfahren nach einem der Ansprüche 21 bis 22, umfassend das Ausrichten der oder jeder Klammer (122a, 122b) an einer entsprechenden Öffnung (126) auf der Fahrzeugplatte und Gleiten der Befestigung (100) bezogen auf die Fahrzeugplatte, um in die oder jede Klammer mit der Fahrzeugplatte einzugreifen.

## Revendications

1. Système de montage (100) pour arrimer un ensemble rideau gonflable à un panneau de véhicule à l'aide d'un moyen de fixation, ledit système de montage comprenant :
une portion de support agencée pour supporter l'ensemble coussin de sécurité gonflable, et une portion de fixation (126) pouvant coopérer avec le moyen de fixation pour fixer le système de montage à un côté avant du panneau de véhicule ;
**caractérisé en ce que**
le système de montage (100) comprend un organe horizontal (120) qui comporte la portion de support et un organe vertical (104) qui s'étend sensiblement perpendiculaire à l'organe horizontal et comporte la portion de fixation (126) ; dans lequel les organes horizontal et vertical sont dans le même plan ;
et au moins une pince (122a, 122b) pour arrimer le système de montage audit panneau de véhicule ; la pince étant résiliente pour appliquer une force de renforcement à un côté arrière du panneau de véhicule en utilisation.

2. Système de montage (100) selon la revendication 1, dans lequel la portion de support est disposée entre la ou chaque pince et la portion de fixation.

3. Système de montage (100) selon la revendication 1 ou la revendication 2, dans lequel le système de montage comprend un premier côté sur lequel l'ensemble coussin de sécurité gonflable est supporté et un second côté d'où la ou chaque pince fait saillie.

4. Système de montage (100) selon la revendication 3, dans lequel la ou chaque pince (122a, 122b) est située sur l'organe horizontal (120).

5. Système de montage (100) selon la revendication 4, dans lequel la ou chaque pince (122a, 122b) est située sur un bord supérieur de l'organe horizontal (120).

6. Système de montage (100) selon l'une quelconque des revendications 3 à 5, dans lequel le système de montage est sensiblement en forme de « T ».

7. Système de montage (100) selon l'une quelconque des revendications précédentes, dans lequel la portion de fixation comprend une ouverture (126) pour recevoir le moyen de fixation.

8. Système de montage (100) selon l'une quelconque des revendications précédentes, dans lequel la ou chaque pince (122a, 122b) comprend une première portion (130) agencée pour s'enclencher avec le côté arrière du panneau de véhicule et une seconde portion (128) qui est espacée du côté arrière du panneau de véhicule en utilisation.

9. Système de montage (100) selon la revendication 8, dans lequel la première portion de la ou chaque pince comprend une surface de butée (138) agencée pour s'enclencher avec le côté arrière du panneau de véhicule, en utilisation.

10. Système de montage (100) selon l'une quelconque des revendications précédentes, dans lequel la pince (122a, 122b) est sensiblement en forme de « S » ou de « Z ».

11. Système de montage (100) selon l'une quelconque des revendications précédentes et agencé de sorte que, en utilisation, l'application d'une force de fixation à la portion de fixation applique un effet de levier à la ou chaque pince (122a, 122b) pour augmenter la force de renforcement (134) sur le côté arrière du panneau.

12. Système de montage (100) selon la revendication 11, comprenant un pivot qui est disposé entre la ou chaque pince (122a, 122b) et la portion de fixation de sorte que, lors de l'application de la force de fixation (134), le système de montage (100) tourne autour du pivot pour appliquer l'effet de levier à la ou chaque pince (122a, 122b).

13. Système de montage (100) selon la revendication 12, dans lequel le pivot est agencé pour buter contre le côté avant du panneau de véhicule en utilisation.

14. Système de montage (100) selon l'une quelconque des revendications précédentes, dans lequel la portion de fixation comprend un moyen d'alignement pour aligner la portion de fixation avec une ouverture (126) du panneau de véhicule.

15. Système de montage (100) selon la revendication 14, dans lequel le moyen d'alignement comprend une cheville d'alignement (106) qui fait saillie de la portion de fixation pour coopérer avec l'ouverture du panneau de véhicule.

16. Système de montage (100) selon l'une quelconque des revendications précédentes, dans lequel la portion de support comprend une corniche de support (116a, 116b, 120) pour supporter l'ensemble coussin de sécurité gonflable.

17. Système de montage (100) selon l'une quelconque des revendications précédentes, dans lequel le système de montage comprend une rampe (116) pour diriger un coussin de sécurité gonflable de l'ensemble coussin de sécurité gonflable lors d'un déploiement, pendant une utilisation.

18. Système de montage (100) selon la revendication 17, dans lequel, le système de montage comprend deux rampes (116a, 116b) séparées par la portion de fixation (126).

19. En combinaison, ensemble coussin de sécurité gonflable comprenant un coussin de sécurité gonflable et un ensemble rideau gonflable pour gonfler le coussin de sécurité gonflable ; et un système de montage (100) selon l'une quelconque des revendications précédentes.

20. Véhicule comprenant un système de montage (100) selon l'une quelconque des revendications 1 à 19, ou la combinaison selon la revendication 19.

21. Procédé de fixation d'un système de montage (100) selon la revendication 1, pour arrimer un ensemble rideau gonflable à un panneau de véhicule, le système de montage comprenant au moins une pince (122a, 122b), le procédé comprenant :
l'enclenchement de la ou chaque pince (122a, 122b) au panneau de véhicule ; et
la fixation du système de montage (100) au panneau de véhicule à l'aide d'un moyen de fixation (126) en un emplacement à distance de la pince ;
l'application d'une force de fixation au système de montage au niveau de l'emplacement à distance de la pince (122a, 122b) pour fixer le système de montage au panneau de véhicule ;
dans lequel la ou chaque pince (122a, 122b) est résiliente pour appliquer une force de renforcement (134) au panneau.

22. Procédé selon la revendication 21, dans lequel l'application de la force de fixation applique un effet de levier à la ou chaque pince (122a, 122b) pour augmenter la force de renforcement (134) sur le panneau.

23. Procédé selon l'une quelconque des revendications 21 et 22, comprenant l'alignement de la ou chaque pince (122a, 122b) avec une ouverture (126) respective sur le panneau de véhicule, et le coulissement du système de montage (100) par rapport au panneau de véhicule pour enclencher la ou chaque pince avec le panneau de véhicule.
